# FASCICULE DE BREVET EUROPEEN

(11) **EP 3 997 690 B1**
(45) Date de publication et mention de la délivrance du brevet: **24.04.2024**
(21) Numéro de dépôt: 20750706.2
(22) Date de dépôt: 09.07.2020
(51) Int. Cl.: G09G 5/36, G02B 27/00, G02B 27/01, G06F 3/01, G06T 5/00, G09G 5/399, G09G 5/34, G09G 5/393

(54) **SYSTÈME DE VISUALISATION D'IMAGES ET PROCÉDÉ DE COMMANDE**
BILDANZEIGESYSTEM UND STEUERVERFAHREN
IMAGE DISPLAY SYSTEM AND CONTROL METHOD

(30) Priorité: 12.07.2019 FR 1907893
(43) Date de publication de la demande: 18.05.2022
(73) Titulaire: Aledia, 38130 Échirolles (FR)
(72) Inventeur: ROBIN, Ivan-Christophe, 38000 Grenoble (FR); MERCIER, Frédéric, 38500 Saint Nicolas de Macherin (FR); CHARBONNIER, Matthieu, 38600 Fontaine (FR)
(74) Mandataire: Germain Maureau
(86) Numéro de dépôt international: PCT/FR2020/051245
(87) Numéro de publication internationale: WO 2021/009451

(56) Documents cités:
- US-A1- 2015 002 542
- US-A1- 2015 145 877
- US-A1- 2015 379 772
- US-A1- 2017 228 015
- US-A1- 2018 182 273
- US-A1- 2018 365 882

## Description

### DOMAINE TECHNIQUE

La présente invention concerne un système de visualisation d'images.

L'invention concerne également un procédé de commande d'un système de visualisation d'images.

L'invention concerne également un masque de réalité virtuelle comportant un système de visualisation d'images.

### ETAT DE LA TECHNIQUE ANTERIEURE

Dans le domaine des masques de réalité virtuelle, il est connu qu'une latence trop élevée entre le mouvement de la tête et l'affichage de l'image correspondante engendre un inconfort chez un utilisateur du masque de réalité virtuelle lors de ses mouvements.

Une solution connue consiste à augmenter la fréquence de rafraîchissement des images. Cependant, cette solution consomme beaucoup d'énergie et limite l'autonomie électrique d'utilisation. Les calculateurs nécessaires sont en outre onéreux, ce qui grève financièrement l'attractivité de la solution.

Une autre solution connue consiste à faire clignoter les images et de les afficher seulement une partie du temps, par exemple avec un ratio de 10%, le reste de l'image perçue étant interpolé par le cerveau de l'utilisateur. Outre le manque de précision des images ainsi produites, cela engendre une baisse importante de la luminosité des images.

Les documents US 2015/379772 A1, US 2018/365882 A1, US 2015/002542 A1, US 2018/182273 A1 et US 2017/228015 A1 décrivent des systèmes d'affichage de Head Mounted Display configurés afin de stocker une image de grande taille dans une première mémoire puis d'extraire et afficher une image de plus petite taille. Cette plus petite image est obtenue par une technique dite de warping. Le document US 2015/145877 A1 décrit une méthode de déroulement, dite scrolling, dans laquelle une image est déplacée en mémoire par une recopie.

### EXPOSE DE L'INVENTION

La présente invention a pour but de fournir une solution de visualisation d'images, notamment d'images de réalité virtuelle, permettant de répondre à tout ou partie des problèmes présentés ci-avant.

Notamment, un but est de fournir une solution répondant à au moins l'un des objectifs suivants :
- obtenir une réactivité de l'affichage des images satisfaisante ;
- obtenir une intensité lumineuse convenable de l'affichage des images ;
- obtenir une autonomie électrique des systèmes de visualisation d'images admissible ;
- fournir une solution restant économique.
Ce but peut être atteint grâce à un système de visualisation d'images, comportant au moins un analyseur de paramètre d'utilisateur configuré pour déterminer au moins un paramètre associé à un utilisateur du système de visualisation d'images; un écran d'affichage d'images comportant une pluralité de pixels lumineux répartis de manière matricielle; au moins un calculateur graphique configuré pour calculer au moins une première image principale susceptible d'être visualisée au moins en partie sur l'écran d'affichage d'images et représentative d'une première zone d'une scène principale ; au moins un dispositif tampon d'image configuré pour stocker au moins la première image principale calculée par le calculateur graphique; un dispositif de commande graphique apte à communiquer avec le dispositif tampon d'image et configuré pour commander un affichage d'au moins une première image secondaire sur l'écran d'affichage d'images, la première image secondaire étant constituée par une première partie de la première image principale incluse entièrement dans la première image principale et positionnée au sein de la première image principale en fonction d'au moins un premier paramètre de l'utilisateur déterminé par l'analyseur de paramètre d'utilisateur, le dispositif de commande graphique étant configuré pour commander l'affichage sur l'écran d'affichage d'images d'une deuxième image secondaire se substituant à la première image secondaire,
la deuxième image secondaire étant constituée par une deuxième partie de l'image principale, incluse entièrement dans la première image principale et décalée au sein de la première image principale par rapport à la première image secondaire en fonction d'au moins un deuxième paramètre de l'utilisateur déterminé par l'analyseur de paramètre d'utilisateur à la suite d'un premier mouvement de l'utilisateur ;
le dispositif de commande graphique comprenant au moins un premier dispositif tampon de pixel relié à un premier pixel de l'écran d'affichage d'images, le premier dispositif tampon de pixel étant configuré pour communiquer avec un deuxième dispositif tampon de pixel relié à un deuxième pixel de l'écran d'affichage d'images, le premier dispositif tampon de pixel étant configuré pour stocker un premier ensemble d'informations relatif au premier pixel,
le deuxième dispositif tampon de pixel étant configuré pour stocker un deuxième ensemble d'informations relatif au deuxième pixel,
le premier dispositif tampon de pixel étant apte à recevoir le deuxième ensemble d'informations depuis le deuxième dispositif tampon de pixel et le deuxième ensemble d'informations venant remplacer le premier ensemble d'informations au sein du premier dispositif tampon de pixel lorsque l'écran d'affichage d'images passe de l'affichage de la première image secondaire à la deuxième image secondaire.

Certains aspects préférés mais non limitatifs du système de visualisation d'images sont les suivants.

Dans une mise en oeuvre du système de visualisation d'images, la première image principale comprend une première dimension x₁ et une deuxième dimension y₁ correspondant respectivement à des premiers et des deuxièmes nombres de pixels lumineux de l'écran et considérées respectivement selon un premier axe X et un deuxième axe Y de la première image principale perpendiculaires entre eux, et dans lequel la deuxième image secondaire est déterminée au moins en décalant la première image secondaire, au sein de la première image principale, d'une première quantité de pixels Δ₁ selon l'axe X et d'une deuxième quantité de pixels Δ₂ selon l'axe Y, la première quantité de pixels Δ₁ et la deuxième quantité de pixels Δ₂ étant déterminées par le calculateur graphique en fonction d'au moins le deuxième paramètre de l'utilisateur, la première quantité de pixels Δ₁ et la deuxième quantité de pixels Δ₂ étant tels que Δ₁/x₁ <50% et Δ₂/y₁ <50%.

Dans une mise en oeuvre du système de visualisation d'images, les informations du premier ensemble d'informations relatif au premier pixel sont représentatives d'une première couleur et/ou d'une première intensité lumineuse à afficher par le premier pixel, et dans lequel les informations du deuxième ensemble d'informations relatif au deuxième pixel sont représentatives d'une deuxième couleur et/ou d'une deuxième intensité lumineuse à afficher par le deuxième pixel.

Dans une mise en oeuvre du système de visualisation d'images, au moins un élément choisi dans le groupe comprenant le premier dispositif tampon de pixel et le deuxième dispositif tampon de pixel est configuré pour communiquer avec un convertisseur numérique analogique apte à convertir un message numérique, en provenance d'un élément choisi dans le groupe comprenant le premier dispositif tampon de pixel et le deuxième dispositif tampon de pixel, en une tension ou en un courant électrique alimentant respectivement le premier pixel ou le deuxième pixel.

Dans une mise en oeuvre du système de visualisation d'images, au moins un paramètre d'utilisateur choisi dans le groupe comprenant le premier, le deuxième et le troisième paramètres d'utilisateur, consiste au moins en une information choisie parmi un mouvement de l'utilisateur, une position de la tête de l'utilisateur, une direction principale de vision de l'utilisateur et un champ de vision de l'utilisateur.

L'invention porte également sur la mise en oeuvre d'un procédé de commande d'un système de visualisation d'images dans lequel le système de visualisation d'images comporte au moins un analyseur de paramètre d'utilisateur configuré pour déterminer au moins un paramètre associé à un utilisateur du système de visualisation d'images ; un écran d'affichage d'images ayant une pluralité de pixels lumineux répartis de manière matricielle ; un dispositif de commande graphique apte à communiquer avec un dispositif tampon d'image et configuré pour commander un affichage d'images sur l'écran d'affichage d'images ; le dispositif de commande graphique comprenant au moins un premier dispositif tampon de pixel relié à un premier pixel de l'écran d'affichage d'images, le premier dispositif tampon de pixel étant configuré pour communiquer avec un deuxième dispositif tampon de pixel relié à un deuxième pixel de l'écran d'affichage d'images,
le premier dispositif tampon de pixel étant configuré pour stocker un premier ensemble d'informations relatif au premier pixel,
le deuxième dispositif tampon de pixel étant configuré pour stocker un deuxième ensemble d'informations relatif au deuxième pixel ;
le procédé comprenant les étapes suivantes :
   a) détermination d'au moins un premier paramètre de l'utilisateur par l'analyseur de paramètre d'utilisateur ;
   b) détermination, par au moins un calculateur graphique , d'au moins une première image principale susceptible d'être visualisée au moins en partie sur l'écran d'affichage d'images, où la première image principale correspond à une première zone d'une scène principale ;
   c) stockage de la première image principale calculée par le calculateur graphique dans le dispositif tampon d'image ;
   d) commande, par le dispositif de commande graphique, de l'affichage par l'écran d'affichage d'images d'une première image secondaire constituée par une première partie de la première image principale incluse entièrement dans la première image principale et positionnée au sein de la première image principale en fonction d'au moins le premier paramètre de l'utilisateur ;
   e) détermination, par l'analyseur de paramètre d'utilisateur, d'au moins un deuxième paramètre de l'utilisateur à la suite d'un premier mouvement de l'utilisateur ;
   f) commande, par le dispositif de commande graphique, de l'affichage sur l'écran d'affichage d'images d'une deuxième image secondaire se substituant à la première image secondaire dans l'écran d'affichage d'images, la deuxième image secondaire étant constituée par une deuxième partie de la première image principale, incluse entièrement dans la première image principale, et décalée au sein de la première image principale par rapport à la première image secondaire en fonction d'au moins le deuxième paramètre de l'utilisateur ;
le premier dispositif tampon de pixel étant apte à recevoir le deuxième ensemble d'informations depuis le deuxième dispositif tampon de pixel et le deuxième ensemble d'informations venant remplacer le premier ensemble d'informations au sein du premier dispositif tampon de pixel lorsque l'écran d'affichage d'images passe de l'affichage de la première image secondaire à la deuxième image secondaire.

Certains aspects préférés mais non limitatifs du procédé de commande sont les suivants.

Dans une mise en oeuvre du procédé, la première image principale comprend une première dimension x₁ et une deuxième dimension y₁ correspondant respectivement à des premiers et des deuxièmes nombres de pixels lumineux de l'écran et considérées respectivement selon un premier axe X et un deuxième axe Y pris sur l'image principale perpendiculaires entre eux, le procédé comportant l'étape suivante, mise en oeuvre préalablement à l'étape f) :
g) détermination, par le calculateur graphique, en fonction du deuxième paramètre de l'utilisateur:
   - d'une première quantité de pixels Δ₁ selon l'axe X, la première image secondaire et la deuxième image secondaire étant décalées de la première quantité de pixels Δ₁ au sein de l'image principale, et
   - d'une deuxième quantité de pixels Δ₂ selon l'axe Y, la première image secondaire et la deuxième image secondaire étant décalées de la deuxième quantité de pixels Δ₂ au sein de l'image principale,
la première quantité de pixels Δ₁ et la deuxième quantité de pixels Δ₂ étant telles que Δ₁/x₁ <50% et Δ₂/y₁ <50%.

L'invention porte également sur un masque de réalité virtuelle comportant un tel système de visualisation d'images.

### BREVE DESCRIPTION DES DESSINS

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
[Fig. 1] est une vue schématique d'une image principale comprenant une première image secondaire et une deuxième image secondaire.
[Fig. 2] est une vue schématique d'un exemple de réalisation d'un système de visualisation d'images selon l'invention.
[Fig. 3] est une vue schématique d'un exemple de réalisation d'un dispositif de commande graphique du système de visualisation d'images.
[Fig. 4] est une vue schématique d'un exemple de réalisation d'un dispositif de commande graphique du système de visualisation d'images.

### EXPOSE DETAILLE DE MODES DE REALISATION PARTICULIERS

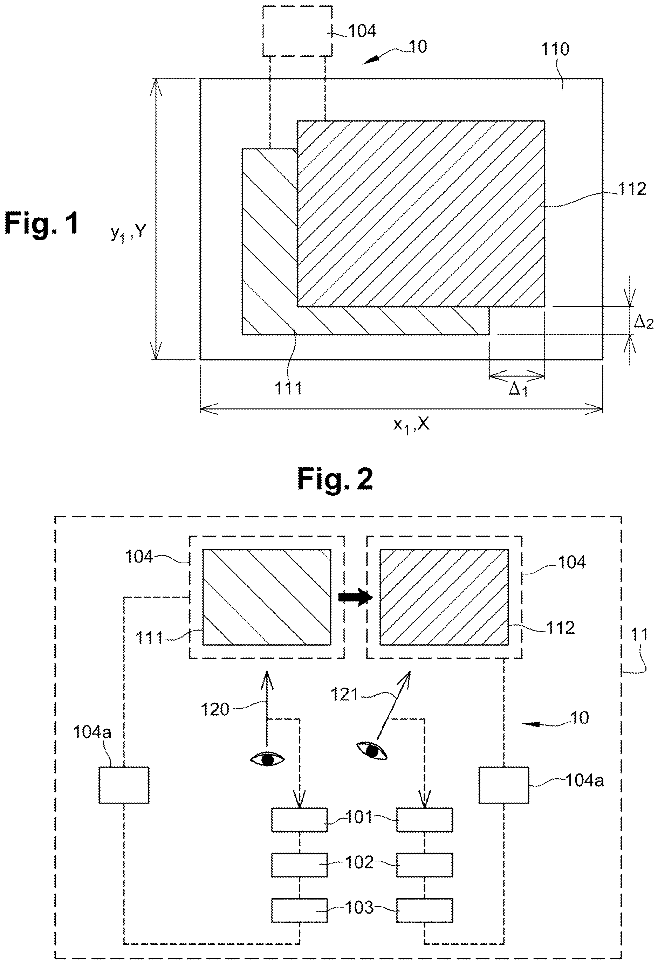

Sur les figures 1 à 4 annexées et dans la suite de la description, des éléments identiques ou similaires en terme fonctionnel sont repérés par les mêmes références. De plus, les différents éléments ne sont pas représentés à l'échelle de manière à privilégier la clarté des figures pour en faciliter la compréhension. Par ailleurs, les différents modes de réalisation et variantes ne sont pas exclusifs les uns des autres et peuvent, au contraire, être combinés entre eux.

Dans la suite de la description, sauf indication contraire, les termes « sensiblement », « environ », « globalement » et « de l'ordre de » signifient « à 10 % près ».

L'invention porte en premier lieu sur un système de visualisation d'images 10, illustré au moins en partie sur les figures 1 à 3, comportant au moins un analyseur de paramètre d'utilisateur 101. L'analyseur de paramètre d'utilisateur 101 est configuré pour déterminer au moins un paramètre associé à un utilisateur du système de visualisation d'images 10. Les paramètres associés à l'utilisateur consistent au moins en une information choisie parmi un mouvement de l'utilisateur et/ou une position de la tête et/ou des yeux de l'utilisateur et/ou une direction principale de vision de l'utilisateur et/ou encore un champ de vision de l'utilisateur. L'analyseur de paramètre d'utilisateur 101 peut comprendre des capteurs de mouvement tels que des accéléromètres ou bien des gyroscopes. L'analyseur de paramètre d'utilisateur 101 peut comprendre des moyens pour déterminer une direction principale de vision de l'utilisateur ou encore un champ de vision de l'utilisateur tels que des caméras, par exemple des caméras fonctionnant dans le domaine de l'infra-rouge couplées avec des sources lumineuses adaptées à l'infra-rouge. Les termes « direction principale de vision » font référence à la direction vers laquelle l'utilisateur regarde de façon nette. Le champ de vision représente l'ensemble visuel perçu par les yeux de l'utilisateur de façon nette ou plus floue, il représente un angle d'environ 180° autour de l'orientation des yeux. De façon générale, la partie de vision nette d'un utilisateur classique correspond à environ une vingtaine de degrés suivant l'orientation des yeux de l'utilisateur. Il peut donc être important de déterminer à quelques degrés prés la direction principale de vision de l'utilisateur afin de pouvoir lui présenter par affichage en retour une image correspondante adaptée.

Le système de visualisation d'images 10 comprend également un écran d'affichage d'images 104 ayant une pluralité de pixels lumineux répartis selon une matrice. Les pixels lumineux sont commandés pour représenter des images. L'homme du métier pourra mettre en oeuvre ses connaissances classiques pour obtenir ces pixels lumineux et les circuits de base associés.

Le système de visualisation d'images 10 comprend également au moins un calculateur graphique 102 configuré pour calculer au moins une première image principale 110. Le calculateur graphique 102 est par exemple appelé « Graphics Processing Unit » selon une terminologie anglosaxonne appropriée. Le calculateur graphique 102 peut par exemple comprendre des microprocesseurs. La première image principale 110 est susceptible d'être visualisée au moins en partie « sur » ou de façon équivalente « dans » ou « par » l'écran d'affichage d'images 104. La première image principale 110 est, par exemple, représentative d'une première zone d'une scène principale. La scène principale représente, par exemple, un environnement statique ou mouvant, virtuel ou non, dans lequel l'utilisateur est susceptible d'évoluer virtuellement. L'utilisateur peut ainsi évoluer de façon statique, par exemple en bougeant uniquement ses yeux ou sa tête ou bien en effectuant des mouvements impliquant tout le corps. Par exemple, en bougeant fortement la tête, l'utilisateur doit pouvoir visualiser un changement d'une première à une deuxième zone différente de la scène principale comme il pourrait le faire dans la réalité. Dans un autre exemple, en bougeant faiblement la tête, l'utilisateur doit pouvoir visualiser un changement faible d'une même zone de la scène principale. Afin de calculer les images correspondant aux différents mouvements de l'utilisateur faibles ou amples avec une fluidité satisfaisante sans perte de luminosité et sans retard, il peut être avantageux d'utiliser l'architecture détaillée ci-après.

Ainsi, le système de visualisation d'images 10 comprend également au moins un dispositif tampon d'image 103 configuré pour stocker au moins la première image principale 110 calculée par le calculateur graphique 102. Par exemple, le dispositif tampon d'image 103 comprend une ou plusieurs mémoires réinscriptibles de types FLASH, RAM ou équivalent.

Le dispositif tampon d'image 103 communique avec un dispositif de commande graphique 104a. Ainsi, le dispositif de commande graphique 104a peut venir utiliser et traiter des données, par exemple de la première image principale 110 ou d'une deuxième image principale 210, stockées temporairement dans le dispositif tampon d'image 103. Le dispositif de commande graphique 104a comprend par exemple des moyens de calculs tels que des microprocesseurs. Comme illustré sur les figures 1 et 2, le dispositif de commande graphique 104a est configuré pour commander un affichage d'au moins une première image secondaire 111 sur l'écran d'affichage d'images 104.

La première image secondaire 111 est une première partie de la première image principale 110 incluse entièrement dans la première image principale 110. La première image secondaire 111 est positionnée au sein de la première image principale 110 en fonction d'au moins un premier paramètre de l'utilisateur 120 déterminé par l'analyseur de paramètre d'utilisateur 101. La première image secondaire 111 correspond ainsi, par exemple, à l'image de la scène principale vue dans la direction principale de vision de l'utilisateur.

Il est avantageux de calculer une première image principale 110 plus large que la première image secondaire 111 qui est affichée sur l'écran d'affichage d'image 104. En effet, les vitesses de calculs par les calculateurs graphiques classiques ou de faible consommation électrique sont plus faibles que les vitesses d'affichage sur l'écran d'affichage d'image 104. Ainsi, en calculant une première ou une deuxième images principales 110, 210 plus large que les images secondaires 111, 112, il est possible ensuite d'en déduire directement, ou avec des calculs simplifiés, effectués par le dispositif de commande graphique 104a, plusieurs images secondaires 111, 112 qui seront affichées plus rapidement que si elles avaient dû être recalculées entièrement séparément.

Dans son mode de fonctionnement standard, le calculateur graphique 102 fournit des images de la scène principale dans la direction principale de vision de l'utilisateur à une fréquence définie par le système (par exemple 60Hz, 120Hz). Une première image principale 110 calculée par le calculateur graphique 102 est ainsi fournie. La partie de la première image principale 110 vue par l'utilisateur est la première image secondaire 111 extraite par le dispositif de commande graphique 104a. Une seconde image principale 210 sera fournie après la période définie par la fréquence du système et correspondra à la scène réactualisée en tenant compte de la direction principale de vision de l'utilisateur réactualisée. Dans l'attente de l'image 210 et en s'appuyant sur l'analyseur de paramètre d'utilisateur 101, une deuxième image secondaire 112 est affichée à l'utilisateur correspondant à sa direction principale de vision actuelle 121. Cette deuxième image secondaire 112 est obtenue par un simple décalage au sein de la première image principale 110, ou par l'application d'algorithmes simples sur cette image 110. Le système permet donc de maintenir l'illusion du mouvement de l'utilisateur entre les deux images principales 110, 210 successives. Ce système offre un gain important en consommation d'énergie et ressources systèmes nécessaires pour le calcul des images comparé à une solution où le calculateur 102 fournirait les images à un rythme où les images secondaires 111, 112 ne seraient plus nécessaires. D'autre part, les images secondaires 111, 112 ainsi générées permettent le remplacement total ou partiel de l'insertion d'images noires augmentant ainsi avantageusement la luminosité de l'écran.

Il est considéré ici une seule première image secondaire 111 et une seule image secondaire 112 se substituant à la première image secondaire 111. Cependant, il peut y avoir de nombreuses images secondaires construites dans une image principale 110, 210 du moment qu'elles sont incluses entièrement dans l'image principale 110, 210 en question.

Dans un exemple de mise en oeuvre du décalage entre la première image secondaire 111 et la deuxième image secondaire 112 au sein de l'image principale 110, il est considéré une première image principale 110 comprenant une première dimension x₁ et une deuxième dimension y₁ exprimées en pixels ou, autrement dit, correspondant respectivement à des premiers et des deuxièmes nombres de pixels lumineux de l'écran d'affichage. Les premières et deuxièmes dimensions x₁ et y₁ sont considérées respectivement selon un premier axe X et un deuxième axe Y de la première image principale 110, perpendiculaires entre eux. La deuxième image secondaire 112 est ainsi déterminée, par le calculateur graphique 102 ou le dispositif de commande graphique 104a à partir des données stockées dans le dispositif tampon d'image 103, au moins en décalant la première image secondaire 111, au sein de la première image principale 110, d'une première quantité de pixels Δ₁ selon l'axe X et d'une deuxième quantité de pixels Δ₂ selon l'axe Y. Ceci est visible sur la figure 1. La première quantité de pixels Δ₁ et la deuxième quantité de pixels Δ₂ répondent également avantageusement aux contraintes suivantes Δ₁/x₁ <50% et Δ₂/y₁ <50%. Le respect de ces dispositions est très avantageux pour optimiser l'autonomie électrique.

Dans le paragraphe suivant, le dispositif de commande graphique 104a comprend des caractéristiques qui peuvent s'implémenter dans un système de visualisation d'images 10 de l'invention mais peuvent également être mises en oeuvre de façon indépendante.

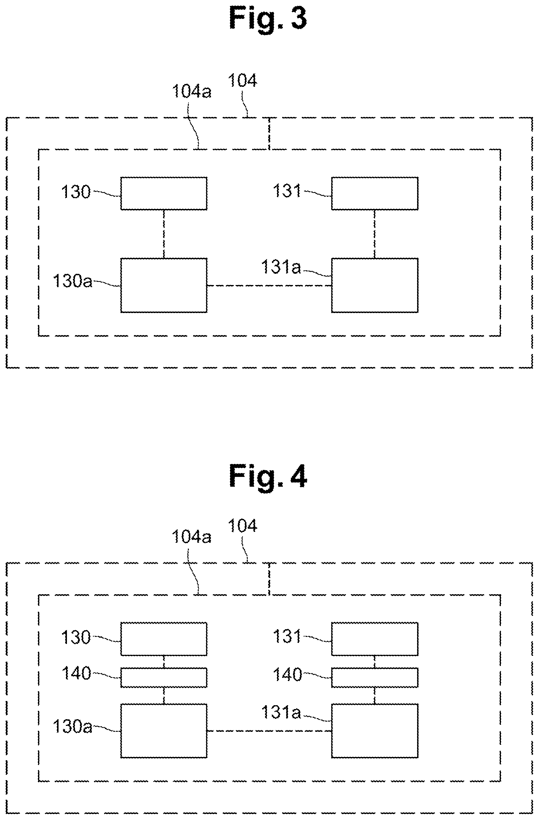

Comme illustré sur la figure 3, le dispositif de commande graphique 104a comprend, dans un exemple, au moins un premier dispositif tampon de pixel 130a relié à un premier pixel 130 de l'écran d'affichage d'images 104. Le premier dispositif tampon de pixel 130a est configuré pour communiquer avec un deuxième dispositif tampon de pixel 131a lui-même relié à un deuxième pixel 131 de l'écran d'affichage d'images 104. Le premier dispositif tampon de pixel 130a est configuré pour stocker un premier ensemble d'informations relatif au premier pixel 130. Le deuxième dispositif tampon de pixel 131a est également configuré pour stocker un deuxième ensemble d'informations relatif au deuxième pixel 131. Le premier dispositif tampon de pixel 130a est en outre apte à recevoir le deuxième ensemble d'informations depuis le deuxième dispositif tampon de pixel 131a et ce de façon bidirectionnelle. Le deuxième ensemble d'informations vient remplacer le premier ensemble d'informations au sein du premier dispositif tampon de pixel 130a lorsque l'écran d'affichage d'images 104 passe de l'affichage de la première image secondaire 111 à la deuxième image secondaire 112. Cette architecture est avantageuse pour améliorer le temps de latence d'affichage. En effet, la transmission des ensembles d'informations, calculés au prélable, se fait de proche en proche à la suite d'un seul signal. Cette architecture est particulièrement avantageuse en combinaison avec le calcul des images secondaires 111, 112 qui demande une latence d'affichage faible.

Dans un exemple, le premier ensemble d'informations relatif au premier pixel 130 correspond à une première couleur et/ou une première intensité lumineuse à afficher par le premier pixel 130. Dans le même exemple, le deuxième ensemble d'informations relatif au deuxième pixel 131 correspond à une deuxième couleur et/ou une deuxième intensité lumineuse à afficher par le deuxième pixel 131. Les dispositifs tampon de pixel 130a, 131a sont par exemple composés d'une ou plusieurs mémoires volatiles.

Dans un exemple illustré sur la figure 4, le premier dispositif tampon de pixel 130a et/ou le deuxième dispositif tampon de pixel 131a sont configurés pour communiquer avec un ou plusieurs convertisseurs numériques analogiques 140 autrement appelés DAC selon l'expression anglaise « Digital Analogie Converter ». Les convertisseurs numériques analogiques 140 sont aptes à convertir un message numérique, venant du premier dispositif tampon de pixel 130a et/ou du deuxième dispositif tampon de pixel 131a, en une tension ou un courant électrique venant alimenter respectivement le premier pixel 130 ou le deuxième pixel 131.

L'invention concerne également un procédé de commande d'un système de visualisation d'images 10, notamment comme celui décrit précédemment. Ce procédé peut se visualiser sur la figure 2. Le procédé comprend les étapes suivantes :
a) détermination d'au moins un premier paramètre de l'utilisateur 120 par l'analyseur de paramètre d'utilisateur 101 ;
b) détermination, par au moins un calculateur graphique 102, d'au moins une première image principale 110 susceptible d'être visualisée au moins en partie sur l'écran d'affichage d'images 104, la première image principale 110 correspondant à une première zone d'une scène principale ;
c) stockage de la première image principale 110 calculée par le calculateur graphique 102 dans le dispositif tampon d'image 103 ;
d) commande, par le dispositif de commande graphique 104a, de l'affichage par l'écran d'affichage d'images 104 de la première image secondaire 111, la première image secondaire 111 étant une première partie de la première image principale 110 incluse entièrement dans la première image principale 110 et positionnée au sein de la première image principale 110 en fonction d'au moins le premier paramètre de l'utilisateur 120.

Ce procédé est avantageux car il permet de réduire la latence entre l'affichage et le mouvement de l'utilisateur.

Le procédé comporte également les étapes supplémentaires suivantes :
e) détermination, par l'analyseur de paramètre d'utilisateur 101, à la suite d'un premier mouvement de l'utilisateur, d'au moins un deuxième paramètre de l'utilisateur 121 ;
f) commande, par le dispositif de commande graphique 104a, de l'affichage sur l'écran d'affichage d'images 104 d'une deuxième image secondaire 112, se substituant à la première image secondaire 111 dans l'écran d'affichage d'images 104.

La deuxième image secondaire 112 est une deuxième partie de la première image principale 110, incluse entièrement dans la première image principale 110, et décalée au sein de la première image principale 110 par rapport à la première image secondaire 111 en fonction d'au moins le deuxième paramètre de l'utilisateur 121.

Ceci est avantageux car lors d'un mouvement de faible amplitude de l'utilisateur alors les images secondaires suffisent pour suivre par exemple la direction principale de vision de l'utilisateur, et ce, sans avoir à recalculer une deuxième image principale 210. L'autonomie électrique s'en trouve accrue et les besoins en puissance de calcul limités ce qui fait baisser de fait les coûts de matériel.

Dans un exemple de mise en oeuvre, la première image principale 110 comprend une première dimension x₁ et une deuxième dimension y₁ exprimées en pixels, ou autrement dit, correspondant respectivement à des premiers et des deuxièmes nombres de pixels lumineux. Les première dimension x₁ et deuxième dimension y₁ sont considérées respectivement selon un premier axe X et un deuxième axe Y pris sur l'image principale 110 et perpendiculaires entre eux. Le procédé comporte alors une étape g) de détermination, par le calculateur graphique 102, en fonction du deuxième paramètre de l'utilisateur 121, d'une première quantité de pixels Δ₁ selon l'axe X. L'étape g) est mise en oeuvre préalablement à l'étape f).

La première image secondaire 111 et la deuxième image secondaire 112 sont décalées de cette première quantité de pixels Δ₁ au sein de l'image principale 110. L'étape g) consiste également en la détermination par le calculateur graphique 102 d'une deuxième quantité de pixels Δ₂ selon l'axe Y. La première image secondaire 111 et la deuxième image secondaire 112 sont décalées de la deuxième quantité de pixels Δ₂ au sein de l'image principale 110. La première quantité de pixels Δ₁ et la deuxième quantité de pixels Δ₂ répondent également aux contraintes suivantes Δ₁/x₁ <50% et Δ₂/y₁ <50%. Ces contraintes sont avantageuses pour permettre d'obtenir une autonomie électrique améliorée et diminuer le coût du matériel de calcul.

L'invention concerne également un masque de réalité virtuelle 11 comportant un système de visualisation d'images 10 comme décrit précédemment. Les figures 2 et 3 illustrent un tel masque de réalité virtuelle 11. Un masque de réalité virtuelle 11 ainsi configuré présente une autonomie électrique accrue et une vitesse d'affichage satisfaisante pour le confort de l'utilisateur le portant, le tout pour un prix réduit.

## Revendications

1. Système de visualisation d'images (10), comportant :
- au moins un analyseur de paramètre d'utilisateur (101) configuré pour déterminer au moins un paramètre associé à un utilisateur du système de visualisation d'images (10) ;
- un écran d'affichage d'images (104) comportant une pluralité de pixels lumineux répartis de manière matricielle ;
- au moins un calculateur graphique (102) configuré pour calculer au moins une première image principale (110) susceptible d'être visualisée au moins en partie sur l'écran d'affichage d'images (104) et représentative d'une première zone d'une scène principale ;
- au moins un dispositif tampon d'image (103) configuré pour stocker au moins la première image principale (110) calculée par le calculateur graphique (102) ;
- un dispositif de commande graphique (104a) apte à communiquer avec le dispositif tampon d'image (103) et configuré pour commander un affichage d'au moins une première image secondaire (111) sur l'écran d'affichage d'images (104), la première image secondaire (111) étant constituée par une première partie de la première image principale (110) incluse entièrement dans la première image principale (110) et positionnée au sein de la première image principale (110) en fonction d'au moins un premier paramètre de l'utilisateur (120) déterminé par l'analyseur de paramètre d'utilisateur (101) ;
le dispositif de commande graphique (104a) étant configuré pour commander l'affichage sur l'écran d'affichage d'images (104) d'une deuxième image secondaire (112) se substituant à la première image secondaire (111), et
la deuxième image secondaire (112) étant constituée par une deuxième partie de l'image principale (110), incluse entièrement dans la première image principale (110) et décalée au sein de la première image principale (110) par rapport à la première image secondaire (111) en fonction d'au moins un deuxième paramètre de l'utilisateur (121) déterminé par l'analyseur de paramètre d'utilisateur (101) à la suite d'un premier mouvement de l'utilisateur ;
**caractérisé en ce que** :
le dispositif de commande graphique (104a) comprend au moins un premier dispositif tampon de pixel (130a) relié à un premier pixel (130) de l'écran d'affichage d'images (104), le premier dispositif tampon de pixel (130a) étant configuré pour communiquer avec un deuxième dispositif tampon de pixel (131a) relié à un deuxième pixel (131) de l'écran d'affichage d'images (104),
le premier dispositif tampon de pixel (130a) est configuré pour stocker un premier ensemble d'informations relatif au premier pixel (130),
le deuxième dispositif tampon de pixel (131a) est configuré pour stocker un deuxième ensemble d'informations relatif au deuxième pixel (131), et
le premier dispositif tampon de pixel (130a) est apte à recevoir le deuxième ensemble d'informations depuis le deuxième dispositif tampon de pixel (131a) et le deuxième ensemble d'informations venant remplacer le premier ensemble d'informations au sein du premier dispositif tampon de pixel (130a) lorsque l'écran d'affichage d'images (104) passe de l'affichage de la première image secondaire (111) à la deuxième image secondaire (112).

2. Système de visualisation d'images (10) selon la revendication 1, dans lequel la première image principale (110) comprend une première dimension x₁ et une deuxième dimension y₁ correspondant respectivement à des premiers et des deuxièmes nombres de pixels lumineux de l'écran et considérées respectivement selon un premier axe (X) et un deuxième axe (Y) de la première image principale (110) perpendiculaires entre eux, et dans lequel la deuxième image secondaire (112) est déterminée au moins en décalant la première image secondaire (111), au sein de la première image principale (110), d'une première quantité de pixels Δ₁ selon le premier axe (X) et d'une deuxième quantité de pixels Δ₂ selon le deuxième axe (Y),
la première quantité de pixels Δ₁ et la deuxième quantité de pixels Δ₂ étant déterminées par le calculateur graphique (102) en fonction d'au moins le deuxième paramètre de l'utilisateur (121),
la première quantité de pixels Δ₁ et la deuxième quantité de pixels Δ₂ étant tels que Δ 1/x1 <50% et Δ2/y1 <50%.

3. Système de visualisation d'images (10) selon l'une quelconque des revendications 1 ou 2, dans lequel les informations du premier ensemble d'informations relatif au premier pixel (130) sont représentatives d'une première couleur et/ou d'une première intensité lumineuse à afficher par le premier pixel (130),
et dans lequel les informations du deuxième ensemble d'informations relatif au deuxième pixel (131) sont représentatives d'une deuxième couleur et/ou d'une deuxième intensité lumineuse à afficher par le deuxième pixel (131).

4. Système de visualisation d'images (10) selon la revendication 3, comprenant un convertisseur numérique analogique (140) et dans lequel au moins un élément choisi dans le groupe comprenant le premier dispositif tampon de pixel (130a) et le deuxième dispositif tampon de pixel (131a) est configuré pour communiquer avec le convertisseur numérique analogique (140), lequel est apte à convertir un message numérique, en provenance d'un élément choisi dans le groupe comprenant le premier dispositif tampon de pixel (130a) et le deuxième dispositif tampon de pixel (131a), en une tension ou en un courant électrique alimentant respectivement le premier pixel (130) ou le deuxième pixel (131).

5. Système de visualisation d'images (10) selon l'une des revendications 1 à 4, dans lequel au moins un paramètre d'utilisateur choisi dans le groupe comprenant le premier et le deuxième paramètres d'utilisateur, consiste au moins en une information choisie parmi un mouvement de l'utilisateur, une position de la tête de l'utilisateur, une direction principale de vision de l'utilisateur et un champ de vision de l'utilisateur.

6. Procédé de commande d'un système de visualisation d'images (10) dans lequel le système de visualisation d'images (10) comporte :
- au moins un analyseur de paramètre d'utilisateur (101) configuré pour déterminer au moins un paramètre associé à un utilisateur du système de visualisation d'images (10) ;
- un écran d'affichage d'images (104) ayant une pluralité de pixels lumineux répartis de manière matricielle ;
- un dispositif de commande graphique (104a) apte à communiquer avec un dispositif tampon d'image (103) et configuré pour commander un affichage d'images sur l'écran d'affichage d'images (104) ;
le procédé comprenant les étapes suivantes :
a) détermination d'au moins un premier paramètre de l'utilisateur (120) par l'analyseur de paramètre d'utilisateur (101) ;
b) détermination, par au moins un calculateur graphique (102), d'au moins une première image principale (110) susceptible d'être visualisée au moins en partie sur l'écran d'affichage d'images (104), où la première image principale (110) correspond à une première zone d'une scène principale ;
c) stockage de la première image principale (110) calculée par le calculateur graphique (102) dans le dispositif tampon d'image (103) ;
d) commande, par le dispositif de commande graphique (104a), de l'affichage par l'écran d'affichage d'images (104) d'une première image secondaire (111) constituée par une première partie de la première image principale (110) incluse entièrement dans la première image principale (110) et positionnée au sein de la première image principale (110) en fonction d'au moins le premier paramètre de l'utilisateur (120) ;
e) détermination, par l'analyseur de paramètre d'utilisateur (101), d'au moins un deuxième paramètre de l'utilisateur (121) à la suite d'un premier mouvement de l'utilisateur ; et
f) commande, par le dispositif de commande graphique (104a), de l'affichage sur l'écran d'affichage d'images (104) d'une deuxième image secondaire (112) se substituant à la première image secondaire (111) dans l'écran d'affichage d'images (104), la deuxième image secondaire (112) étant constituée par une deuxième partie de la première image principale (110), incluse entièrement dans la première image principale (110), et décalée au sein de la première image principale (110) par rapport à la première image secondaire (111) en fonction d'au moins le deuxième paramètre de l'utilisateur (121), **caractérisé en ce que** :
le dispositif de commande graphique (104a) comprend au moins un premier dispositif tampon de pixel (130a) relié à un premier pixel (130) de l'écran d'affichage d'images (104), le premier dispositif tampon de pixel (130a) étant configuré pour communiquer avec un deuxième dispositif tampon de pixel (131a) relié à un deuxième pixel (131) de l'écran d'affichage d'images (104),
le premier dispositif tampon de pixel (130a) est configuré pour stocker un premier ensemble d'informations relatif au premier pixel (130),
le deuxième dispositif tampon de pixel (131a) est configuré pour stocker un deuxième ensemble d'informations relatif au deuxième pixel (131),le premier dispositif tampon de pixel (130a) recevant le deuxième ensemble d'informations depuis le deuxième dispositif tampon de pixel (131a) et le deuxième ensemble d'informations venant remplacer le premier ensemble d'informations au sein du premier dispositif tampon de pixel (130a) lorsque l'écran d'affichage d'images (104) passe de l'affichage de la première image secondaire (111) à la deuxième image secondaire (112).

7. Procédé selon la revendication 6, dans lequel la première image principale (110) comprend une première dimension x₁ et une deuxième dimension y₁ correspondant respectivement à des premiers et des deuxièmes nombres de pixels lumineux de l'écran et considérées respectivement selon un premier axe (X) et un deuxième axe (Y) pris sur l'image principale (110) perpendiculaires entre eux, le procédé comportant l'étape suivante, mise en oeuvre préalablement à l'étape f) :
g) détermination, par le calculateur graphique (102), en fonction du deuxième paramètre de l'utilisateur (121):
- d'une première quantité de pixels Δ₁ selon l'axe (X), la première image secondaire (111) et la deuxième image secondaire (112) étant décalées de la première quantité de pixels Δ₁ au sein de l'image principale (110), et
- d'une deuxième quantité de pixels Δ₂ selon l'axe (Y), la première image secondaire (111) et la deuxième image secondaire (112) étant décalées de la deuxième quantité de pixels (Δ₂) au sein de l'image principale (110),
la première quantité de pixels Δ₁ et la deuxième quantité de pixels Δ₂ étant telles que Δ₁/x₁ <50% et Δ₂/y₁ <50%.

8. Masque de réalité virtuelle (11) comportant un système de visualisation d'images (10) selon l'une quelconque des revendications 1 à 5.

## Patentansprüche

1. Bildbetrachtungssystem (10), beinhaltend:
- mindestens einen Analysator der Benutzerparameter (101), der konfiguriert ist, um mindestens einen Parameter zu bestimmen, der einem Benutzer des Bildbetrachtungssystems (10) zugeordnet ist;
- einen Bildanzeigebildschirm (104), der eine Vielzahl von Lichtpixeln beinhaltet, die matrizenartig verteilt sind;
- mindestens einen Grafikrechner (102), der konfiguriert ist, um mindestens ein erstes Hauptbild (110) zu berechnen, das mindestens teilweise auf dem Bildanzeigebildschirm (104) betrachtet werden kann und für einen ersten Bereich einer Hauptszene repräsentativ ist;
- mindestens eine Bildpuffervorrichtung (103), die konfiguriert ist, um mindestens das erste Hauptbild (110), das vom Grafikrechner (102) berechnet wurde, zu speichern;
- eine grafische Steuervorrichtung (104a), die geeignet ist, um mit der Bildpuffervorrichtung (103) zu kommunizieren, und konfiguriert ist, um eine Anzeige von mindestens einem ersten Sekundärbild (111) auf dem Bildanzeigebildschirm (104) zu steuern, wobei das erste Sekundärbild (111) aus einem ersten Teil des ersten Hauptbildes (110) besteht, der vollständig im ersten Hauptbild (110) enthalten ist und innerhalb des ersten Hauptbildes (110) in Abhängigkeit von mindestens einem ersten Benutzerparameter (120), der durch den Analysator der Benutzerparameter (101) bestimmt wurde, positioniert ist;
wobei die grafische Steuervorrichtung (104a) konfiguriert ist, um die Anzeige auf dem Bildanzeigebildschirm (104) eines zweiten Sekundärbildes (112), das das erste Sekundärbild (111) ersetzt, zu steuern, und
das zweite Sekundärbild (112) aus einem zweiten Teil des Hauptbildes (110) besteht, der vollständig im ersten Hauptbild (110) enthalten ist, und innerhalb des ersten Hauptbildes (110) bezüglich dem ersten Sekundärbild (111) in Abhängigkeit von mindestens einem zweiten Benutzerparameter (121) versetzt ist, der durch den Analysator der Benutzerparameter (101) nach einer ersten Bewegung des Benutzers bestimmt wird;
**dadurch gekennzeichnet, dass**:
die grafische Steuervorrichtung (104a) mindestens eine erste Pixelpuffervorrichtung (130a) umfasst, die mit einem ersten Pixel (130) des Bildanzeigebildschirms (104) verbunden ist, wobei die erste Pixelpuffervorrichtung (130a) konfiguriert ist, um mit einer zweiten Pixelpuffervorrichtung (131a), die mit einem zweiten Pixel (131) des Bildanzeigebildschirms (104) verbunden ist, zu kommunizieren,
die erste Pixelpuffervorrichtung (130a) konfiguriert ist, um einen ersten Informationssatz in Bezug auf das erste Pixel (130) zu speichern,
die zweite Pixelpuffervorrichtung (131a) konfiguriert ist, um einen zweiten Informationssatz in Bezug auf das zweite Pixel (131) zu speichern, und
die erste Pixelpuffervorrichtung (130a) geeignet ist, um den zweiten Informationssatz von der zweiten Pixelpuffervorrichtung (131a) zu empfangen, und der zweite Informationssatz den ersten Informationssatz innerhalb der ersten Pixelpuffervorrichtung (130a) austauscht, wenn der Bildanzeigebildschirm (104) von der Anzeige des ersten Sekundärbildes (111) zum zweiten Sekundärbild (112) wechselt.

2. Bildbetrachtungssystem (10) nach Anspruch 1, wobei das erste Hauptbild (110) eine erste Dimension x₁ und eine zweite Dimension y₁ umfasst, die jeweils der ersten und der zweiten Menge von Lichtpixeln des Bildschirms entsprechen, und jeweils entlang einer ersten Achse (X) und einer zweiten Achse (Y) des ersten Hauptbildes (110), senkrecht zueinander, berücksichtigt werden, und wobei das zweite Sekundärbild (112) mindestens durch Versetzen des ersten Sekundärbildes (111) bestimmt wird, innerhalb des ersten Hauptbildes (110), mit einer ersten Anzahl von Pixeln Δ₁ entlang der ersten Achse (X) und einer zweiten Anzahl von Pixeln Δ₂ entlang der zweiten Achse (Y),
wobei die erste Anzahl von Pixeln Δ₁ und die zweite Anzahl von Pixeln Δ₂ durch den Grafikrechner (102) in Abhängigkeit von mindestens dem zweiten Benutzerparameter (121) bestimmt werden,
wobei die erste Anzahl von Pixeln Δ₁ und die zweite Anzahl von Pixeln Δ₂ so sind, dass Δ₁ / x₁ < 50 % und Δ₂ / y₁ < 50 %.

3. Bildbetrachtungssystem (10) nach einem der Ansprüche 1 oder 2, wobei die Informationen des ersten Informationssatzes in Bezug auf das erste Pixel (130) repräsentativ für eine erste Farbe sind und/oder eine erste Lichtintensität, die durch das erste Pixel (130) angezeigt werden soll,
und wobei die Informationen des zweiten Informationssatzes in Bezug auf das zweite Pixel (131) repräsentativ für eine zweite Farbe sind und/oder eine zweite Lichtintensität, die durch das zweite Pixel (131) angezeigt werden soll.

4. Bildbetrachtungssystem (10) nach Anspruch 3, einen Digital-AnalogWandler (140) umfassend, und wobei mindestens ein Element, das aus der Gruppe ausgewählt ist, die die erste Pixelpuffervorrichtung (130a) und die zweite Pixelpuffervorrichtung (131a) umfasst, konfiguriert ist, um mit dem Digital-Analog-Wandler (140) zu kommunizieren, der geeignet ist, eine digitale Nachricht von einem Element zu konvertieren, das aus der Gruppe ausgewählt ist, die die erste Pixelpuffervorrichtung (130a) und die zweite Pixelpuffervorrichtung (131a) umfasst, in eine Spannung oder einen elektrischen Strom, der jeweils das erste Pixel (130) oder das zweite Pixel (131) versorgt.

5. Bildbetrachtungssystem (10) nach einem der Ansprüche 1 bis 4, wobei mindestens ein Benutzerparameter, der aus der Gruppe ausgewählt ist, die den ersten und den zweiten Benutzerparameter umfasst, mindestens auf einer Information beruht, die aus einer Bewegung des Benutzers, einer Position des Kopfes des Benutzers, einer Hauptsichtrichtung des Benutzers und einem Sichtfeld des Benutzers ausgewählt ist.

6. Verfahren zum Steuern eines Bildbetrachtungssystems (10), wobei das Bildbetrachtungssystem (10) beinhaltet:
- mindestens einen Analysator der Benutzerparameter (101), der konfiguriert ist, um mindestens einen Parameter zu bestimmen, der einem Benutzer des Bildbetrachtungssystems (10) zugeordnet ist;
- einen Bildanzeigebildschirm (104), der eine Vielzahl von Lichtpixeln aufweist, die matrizenartig verteilt sind;
- eine grafische Steuervorrichtung (104a), die geeignet ist, um mit einer Bildpuffervorrichtung (103) zu kommunizieren, und konfiguriert ist, um eine Bildanzeige auf dem Bildanzeigebildschirm (104) zu steuern;
wobei das Verfahren die folgenden Schritte umfasst:
a) Bestimmen mindestens eines ersten Benutzerparameters (120) durch den Analysator der Benutzerparameter (101);
b) Bestimmen, durch mindestens einen Grafikrechner (102), von mindestens einem ersten Hauptbild (110), das mindestens teilweise auf dem Bildanzeigebildschirm (104) betrachtet werden kann, wobei das erste Hauptbild (110) einem ersten Bereich einer Hauptszene entspricht;
c) Speichern des ersten Hauptbildes (110), das vom Grafikrechner (102) in der Bildpuffervorrichtung (103) berechnet wurde;
d) Steuern, durch die grafische Steuervorrichtung (104a), der Anzeige, durch den Bildanzeigebildschirm (104), eines ersten Sekundärbildes (111), das aus einem ersten Teil des ersten Hauptbildes (110) besteht, der vollständig im ersten Hauptbild (110) enthalten ist, und innerhalb des ersten Hauptbildes (110) in Abhängigkeit von mindestens dem ersten Benutzerparameter (120) positioniert ist;
e) Bestimmen, durch den Analysator der Benutzerparameter (101), von mindestens einem zweiten Benutzerparameter (121) nach einer ersten Bewegung des Benutzers; und
f) Steuern, durch die grafische Steuervorrichtung (104a), der Anzeige auf dem Bildanzeigebildschirm (104) eines zweiten Sekundärbildes (112), das das erste Sekundärbild (111) im Bildanzeigebildschirm (104) ersetzt, wobei das zweite Sekundärbild (112) aus einem zweiten Teil des ersten Hauptbildes (110) besteht, der vollständig im ersten Hauptbild (110) enthalten ist, und innerhalb des ersten Hauptbildes (110) bezüglich dem ersten Sekundärbild (111) in Abhängigkeit von mindestens dem zweiten Benutzerparameter (121) versetzt ist, **dadurch gekennzeichnet, dass**:
die grafische Steuervorrichtung (104a) mindestens eine erste Pixelpuffervorrichtung (130a) umfasst, die mit einem ersten Pixel (130) des Bildanzeigebildschirms (104) verbunden ist, wobei die erste Pixelpuffervorrichtung (130a) konfiguriert ist, um mit einer zweiten Pixelpuffervorrichtung (131a), die mit einem zweiten Pixel (131) des Bildanzeigebildschirms (104) verbunden ist, zu kommunizieren,
die erste Pixelpuffervorrichtung (130a) konfiguriert ist, um einen ersten Informationssatz in Bezug auf das erste Pixel (130) zu speichern,
die zweite Pixelpuffervorrichtung (131a) konfiguriert ist, um einen zweiten Informationssatz in Bezug auf das zweite Pixel (131) zu speichern, wobei die erste Pixelpuffervorrichtung (130a) den zweiten Informationssatz von der zweiten Pixelpuffervorrichtung (131a) empfängt, und der zweite Informationssatz den ersten Informationssatz innerhalb der ersten Pixelpuffervorrichtung (130a) austauscht, wenn der Bildanzeigebildschirm (104) von der Anzeige des ersten Sekundärbildes (111) zum zweiten Sekundärbild (112) wechselt.

7. Verfahren nach Anspruch 6, wobei das erste Hauptbild (110) eine erste Dimension x₁ und eine zweite Dimension y₁ umfasst, die jeweils der ersten und der zweiten Menge von Lichtpixeln des Bildschirms entsprechen, und jeweils entlang einer ersten Achse (X) und einer zweiten Achse (Y), die auf dem Hauptbild (110) senkrecht zueinander aufgenommen sind, berücksichtigt werden, wobei das Verfahren den folgenden Schritt beinhaltet, der vor dem Schritt f) durchgeführt wird:
g) Bestimmen, durch den Grafikrechner (102), in Abhängigkeit vom zweiten Benutzerparameter (121):
- einer ersten Anzahl von Pixeln Δ₁ entlang der Achse (X), wobei das erste Sekundärbild (111) und das zweite Sekundärbild (112) um die erste Anzahl von Pixeln Δ₁ innerhalb des Hauptbildes (110) versetzt sind, und
- einer zweiten Anzahl von Pixeln Δ₂ entlang der Achse (Y), wobei das erste Sekundärbild (111) und das zweite Sekundärbild (112) um die zweite Anzahl von Pixeln (Δ₂) innerhalb des Hauptbildes (110) versetzt sind,
wobei die erste Anzahl von Pixeln Δ₁ und die zweite Anzahl von Pixeln Δ₂ so sind, dass Δ₁ / x₁ < 50 % und Δ₂ / y₁ < 50 %.

8. Virtual-Reality-Helm (11), ein Bildbetrachtungssystem (10) nach einem der Ansprüche 1 bis 5 beinhaltend.

## Claims

1. An image display system (10), comprising:
- at least one user parameter analyzer (101) configured to determine at least one parameter associated with a user of the image display system (10);
- an image display screen (104) comprising a plurality of light pixels distributed in a matrix manner;
- at least one graphic calculator (102) configured to calculate at least one first main image (110) capable of being displayed at least in part on the image display screen (104) and representative of a first zone of a main scene;
- at least one image buffer device (103) configured to store at least the first main image (110) calculated by the graphics computer (102);
- a graphics control device (104a) capable of communicating with the image buffer device (103) and configured to control a display of at least one first secondary image (111) on the image display screen (104), the first secondary image (111) being constituted by a first part of the first main image (110) included entirely in the first main image (110) and positioned within the first main image (110) based on at least one first user parameter (120) determined by the user parameter analyzer (101);
the graphics control device (104a) being configured to control the display on the image display screen (104) of a second secondary image (112) replacing the first secondary image (111), and
the second secondary image (112) being constituted by a second part of the main image (110), included entirely in the first main image (110) and offset within the first main image (110) relative to the first secondary image (111) based on at least one second user parameter (121) determined by the user parameter analyzer (101) following a first user movement;
**characterized in that**:
the graphics control device (104a) comprises at least one first pixel buffer device (130a) connected to a first pixel (130) of the image display screen (104), the first pixel buffer device (130a) being configured to communicate with a second pixel buffer device (131a) connected to a second pixel (131) of the image display screen (104),
the first pixel buffer device (130a) is configured to store a first set of information relating to the first pixel (130),
the second pixel buffer device (131a) is configured to store a second set of information relating to the second pixel (131), and
the first pixel buffer device (130a) is capable of receiving the second set of information from the second pixel buffer device (131a) and the second set of information replacing the first set of information within the first pixel buffer device (130a) when the image display screen (104) switches from displaying the first secondary image (111) to the second secondary image (112).

2. The image display system (10) according to claim 1, wherein the first main image (110) comprises a first dimension x₁ and a second dimension y₁ corresponding respectively to first and second numbers of light pixels of the screen and considered respectively along a first axis (X) and a second axis (Y) of the first main image (110) perpendicular to each other, and wherein the second secondary image (112) is determined at least by shifting the first secondary image (111), within the first main image (110), by a first quantity of pixels Δ₁ along the first axis (X) and a second quantity of pixels Δ₂ along the second axis (Y),
the first quantity of pixels Δ₁ and the second quantity of pixels Δ₂ being determined by the graphics calculator (102) as a function of at least the second user parameter (121),
the first quantity of pixels Δ₁ and the second quantity of pixels Δ₂ being such that Δ₁/x₁ <50% and Δ₂/y₁ <50%.

3. The image display system (10) according to any one of claims 1 or 2, wherein the information of the first set of information relating to the first pixel (130) are representative of a first color and/or a first light intensity to be displayed by the first pixel (130),
and wherein the information of the second set of information relating to the second pixel (131) are representative of a second color and/or a second light intensity to be displayed by the second pixel (131).

4. The image display system (10) according to claim 3, comprising a digital-to-analog converter (140) and wherein at least one element selected from the group comprising the first pixel buffer device (130a) and the second pixel buffer device (131a) is configured to communicate with the digital-to-analog converter (140), which is capable of converting a digital message, coming from an element selected from the group comprising the first pixel buffer device (130a) and the second pixel buffer device (131a), into a voltage or an electric current respectively supplying the first pixel (130) or the second pixel (131).

5. The image display system (10) according to any of claims 1 to 4, wherein at least one user parameter selected from the group comprising the first and second user parameters, consists of at least one information selected from a movement of the user, a position of the user head, a main direction of vision of the user and a field of vision of the user.

6. A method for controlling an image display system (10) wherein the image display system (10) comprises:
- at least one user parameter analyzer (101) configured to determine at least one parameter associated with a user of the image display system (10);
- an image display screen (104) having a plurality of light pixels distributed in a matrix manner;
- a graphics control device (104a) capable of communicating with an image buffer device (103) and configured to control a display of images on the image display screen (104);
the method comprising the following steps:
a) determining at least one first user parameter (120) by the user parameter analyzer (101);
b) determining, by at least one graphics calculator (102), at least one first main image (110) capable of being displayed at least in part on the image display screen (104), where the first main image (110) corresponds to a first zone of a main scene;
c) storing the first main image (110) calculated by the graphics calculator (102) in the image buffer device (103);
d) controlling, by the graphics control device (104a), the display by the image display screen (104) of a first secondary image (111) constituted by a first part of the first main image (110) included entirely in the first main image (110) and positioned within the first main image (110) based on at least the first user parameter (120);
e) determining, by the user parameter analyzer (101), at least one second user parameter (121) following a first movement of the user; and
f) controlling, by the graphics control device (104a), the display on the image display screen (104) of a second secondary image (112) replacing the first secondary image (111) in the image display screen (104), the second secondary image (112) being constituted by a second part of the first main image (110), included entirely in the first main image (110), and offset within the first main image (110) relative to the first secondary image (111) based on at least the second user parameter (121), **characterized in that**:
the graphics control device (104a) comprises at least one first pixel buffer device (130a) connected to a first pixel (130) of the image display screen (104), the first pixel buffer device (130a) being configured to communicate with a second pixel buffer device (131a) connected to a second pixel (131) of the image display screen (104),
the first pixel buffer device (130a) is configured to store a first set of information relating to the first pixel (130),
the second pixel buffer device (131a) is configured to store a second set of information relating to the second pixel (131), the first pixel buffer device (130a) receiving the second set of information from the second pixel buffer device (131a) and the second set of information replacing the first set of information within the first pixel buffer device (130a) when the image display screen (104) switches from displaying the first image secondary (111) to the second secondary image (112).

7. The method according to claim 6, wherein the first main image (110) comprises a first dimension x₁ and a second dimension y₁ corresponding respectively to first and second numbers of light pixels of the screen and considered respectively along a first axis (X) and a second axis (Y) taken from the main image (110) perpendicular to each other, the method comprising the following step, implemented prior to step f):
g) determining, by the graphic calculator (102), as a function of the second user parameter (121):
- a first quantity of pixels Δ₁ along the axis (X), the first secondary image (111) and the second secondary image (112) being offset from the first quantity of pixels Δ₁ within the main image (110), and
- a second quantity of pixels Δ₂ along the axis (Y), the first secondary image (111) and the second secondary image (112) being offset by the second quantity of pixels (Δ₂) within the main image (110),
the first quantity of pixels Δ₁ and the second quantity of pixels Δ₂ being such that Δ₁/_{X1} <50% and Δ₂/y₁ <50%.

8. A virtual reality mask (11) comprising an image display system (10) according to any one of claims 1 to 5.
